# EUROPEAN PATENT APPLICATION

(11) **EP 1 079 621 A1**
(43) Date of publication of application: **28.02.2001**
(21) Application number: 99116698.4
(22) Date of filing: 26.08.1999
(51) Int. Cl.: H04N 5/645, H04N 5/64, H04N 9/29

(54) **Supporting frame for TV set and assembling method for TV sets**

(71) Applicant: SONY-WEGA PRODUKTIONS GmbH, 70327 Stuttgart (DE)
(72) Inventor: Günther, Jürgen, c/o Sony-Wega Produktions GmbH, 70736 Stuttgart (DE)
(74) Representative: MÜLLER & HOFFMANN Patentanwälte

(57) **Abstract**

A supporting frame (1) for a TV set which supports a cathode ray tube (2), comprises a closed frame which comprises two side parts, a top part and a bottom part and which stabilizes itself in case the cathode ray tube (2) is mounted thereto; and a bottom plate integrally combined with said bottom part and building a foot of the supporting frame (1) so that said supporting frame (1) stands in a stable position with and without mounted cathode ray tube (2). Independently therefrom the supporting frame (1) for a TV set which supports the cathode ray tube (2) comprises a pick-up attachment for a degaussing coil (3) into which the degaussing coil (3) is mounted before the cathode ray tube (2) is mounted into the frame. Furtheron, a method to assemble a TV set comprises the steps of placing a selfstanding footed closed frame (1) on an assembly line, fixing a degaussing coil (3) to the footed closed frame (1), and mounting a cathode ray tube (2) into the footed closed frame (1).

## Description

The present invention relates to a TV set and an assembling method therefore, in particular the present invention relates to a frame for supporting the cathode ray tube, the chassis and housing parts of a TV set and an assembling method for a TV set including such a supporting frame.

In conventional television sets the cathode ray tube is mounted on a cabinet which also holds a chassis for driving the cathode ray tube and providing the functionality of the television. Usually, the cathode ray tube is mounted on the cabinet with securing screws and the chassis which is connected to the cathode ray tube through connection wires is attached to the cabinet with the help of guide grooves of the cabinet. Furtheron, a rear cover is attached to the cabinet to close the television set.

Such a television set which comprises a relatively complicated cabinet is shown as prior art in US 5,363,150. To be able of simplifying the casing of a television set, this document proposes an integral unit comprising a mounting frame for firmly supporting the cathode ray tube, a chassis retainer that supports a circuit arrangement for driving the cathode ray tube which is firmly connected to the mounting frame, and an escutcheon plate which is secured to the mounting frame and located in the front of the screen of the cathode ray tube. A cabinet with two side walls, a front wall, and a top wall as well as a back cover defined by two side walls, a top wall, and a back wall can be fixed to the integral unit.

Therefore, to simplify the design of the cabinet and to enable the user to select the design of the cabinet and the back cover at a local distribution station, a solid integral unit is proposed that comprises three parts which can easily be manufacured. Tho order of assembling the TV set comprising such an integral unit is first to screw the cathode ray tube to the mounting frame, then screw the chassis retainer to the mounting frame and finally to secure this assembly by screwing the escutcheon plate onto the mounting frame.

Furtheron, also DE 41 03 484 C2 proposes to provide a solid frame to mount the cathode ray tube, which also serves for supporting the chassis to provide a television set comprising a housing which is not the supporting base for the cathode ray tube and the chassis. According to this document the housing which comprises two side panels, a bottom plate, and a top and rear cover comprises no supporting elements, but simple paneling elements, which are fixed to the solid frame, e.g. with the snap-in method.

However, the integral unit and the frame disclosed in these both documents are described to be solid so that they can not wind to firmly hold the cathode ray tube. Therefore, these elements described above inherit the disadvantage that they either have a complex structure which is securing a certain stiffness, i.e. a construction of three parts screwed against each other wherein each of those parts is rigid in a direction perpendicular to the direction of rigidity of the other parts, or has to be formed of metal. Therefore, the materials to be used for forming such elements are quite limited, their manufacturing and the manufacturing of a TV set build therewith is quite costly, since either some parts have to be fixed against each other or metal has to be formed. Furtheron, the shipping of such integral units or frames inherits the disadvantage that either three parts have to be shipped separately, or the frame needs lots of space, since it is provided in metal with a certain stiffness so that it can not wind.

Furtheron, the integral unit and the frame diclosed in these both documents have to be of a simple structure, since either the metallic mold for forming the parts of the integral unit has to be simple and the forming cycle should be short or the frame is formed of a bended sheet metal plate which allows no complicated structure.

Still furtheron, the integral unit disclosed in US 5,363,150 has the drawback that it can only be completely assembled after the cathode ray tube has been mounted.

It is therefore the object of the present invention to provide an improved frame for a TV set that carries the cathode ray tube and the chassis as well as provides provides support for the housing parts and therewith simplifies the manufacturing of a TV set. Furtheron, it is the object of the present invention to provide a method of assembling a TV set which comprises a frame according to the present invention.

The frame according to the present invention is defined in independent claims 1 and 9 and the inventive method to assemble a TV set including a frame according to the present invention is defined in independent claim 21. Preferred embodiments thereof are respectively defined in the respective subclaims.

A frame according to the present invention which supports the cathode ray tube and the electronic chassis as well as the housing parts has several advantages in comparison with the constructions according to the prior art.

The frame according to the first embodimment of the present invention that is defined in independent claim 1 and can be described as a footed closed frame has the advantage that the stiffness of the frame itself needs not to be so high that it can not wind. Therefore the material of the frame needs not to be metal, but preferably a 100 % recycled PS-HI is used. Furtheron, the footed closed frame, i.e. a closed frame which comprises a foot to be selfstanding with and without mounted cathode ray tube, can consist of one part only.

According to the present invention the cathode ray tube introduces the necessary stiffness to the assembly of cathode ray tube and frame. Therefore, the frame only needs to have a stiffness of firmly holding the cathode ray tube against a stronger part thereof which is integrally combined with the foot of the frame so that all other parts of the frame that can have certain flexible properties are held and adjusted by the cathode ray tube.

This structure of a self standing footed closed frame enables that the assembly of a TV set is considerably simplified, since first the frame alone and then the partly assembled TV set can stand without any support on an assembly line.

This feature also enables that the footed closed frame can be folded similar to a collapsible pannier.

Preferrably the foot of the frame builds the foot of the cabinet, i.e. the foot of the TV set. In this case, the housing of the TV set needs no foot itself.

Further preferrably, the foot of the frame comprises a chassis holder into which a chassis with or without a chassis retainer can be inserted.

The frame according to the second embodimment of the present invention that is defined in independent claim 9 and can be described as a multifunctional frame has the advantage of not only supporting the cathode ray tube, the chassis, and the housing, but that it comprises also parts adapted to hold, fix, or support other parts of the television, e.g. loud speaker boxes, cables or cable holders, and in particular the degaussing coil of the television.

Therefore, the frame according to the present invention comprises, independent from its material or folding function, two grooves which allow to snap-in the degaussing coil at the front bottom and top of the cathode ray tube and two arms which have snap-in members to hold the degaussing coil at the backside of the cathode ray tube in an appropriate position. These grooves and arms which hold the degaussing coil independent from a fixing of the cathode ray tube (in contrast with the prior art according to which the degaussing coil is fixed to the cathode ray tube itselfl enable an advantageous assembling procedure in that first the degaussing coil is fixed to the frame according to the present invention whereafter and independent therefrom the cathode ray tube itself is fixed thereto.

Furtheron, independent from the snap-in arrangement for the degaussing coil, the frame might comprise one or more holders that support the chassis in a service position. Preferably these holders are arranged so that the chassis can be brought into a service position for left-handed persons as well as for right-handed persons. These holders are preferrably arranged at the arms for holding the degaussing coil.

Also, to secure a predetermined distance of the anode cable to the housing, a cable holder for the anode cable can be located on one or both of the arms for holding the degaussing coil. Similar, also fixing points for cable holders for other cables can be arranged on one or both of the arms for holding the degaussing coil

Another advantage of the frame according to one of the embodiments of the present invention is that it allows more freedom in designing the housing of the television set, since - due to the free selection of materials for the frame itself - the frame itself can have a rather complicated structure, while it needs not to be solid, but mainly only strong enough to hold the cathode ray tube against its foot. Therefore, it can easily be achieved that instead of a cabinet generally having a rectangular-box-like configuration with e.g. two side walls, a top wall, and a front wall, and a back cover having a similar configuration defined by e.g. two side walls, a top wall, and a back wall, it is possible to provide just a flat front panel and a back cover having a configuration of two side walls, a top wall, and a back wall, or just the form of a half cylinder as back wall and a top wall.

The present invention will be better understood from the following detailed description of an exemplary preferred embodiment thereof taken in conjunction with the accompanying drawings, wherein
- **Fig. 1**: shows an explosion view of a television set comprising a frame according to the present invention; and
- **Figs. 2a and 2b**: show a detailed view of a frame according to the present invention.

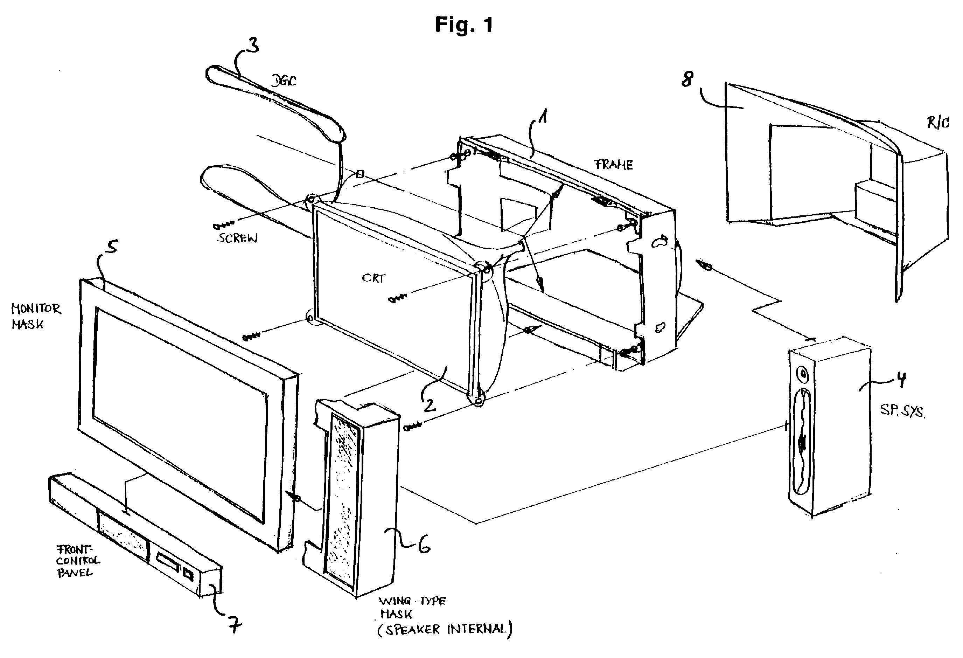

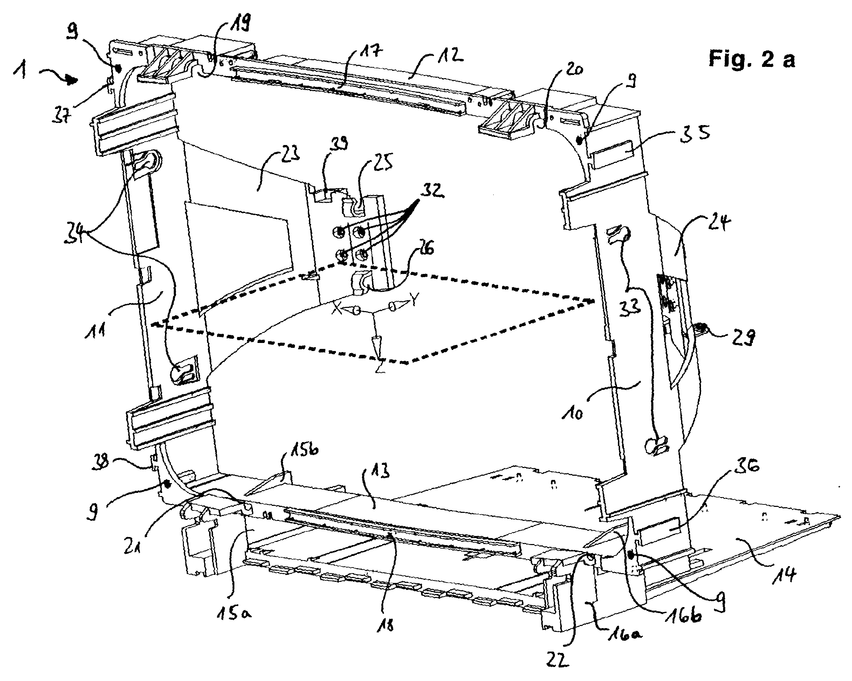

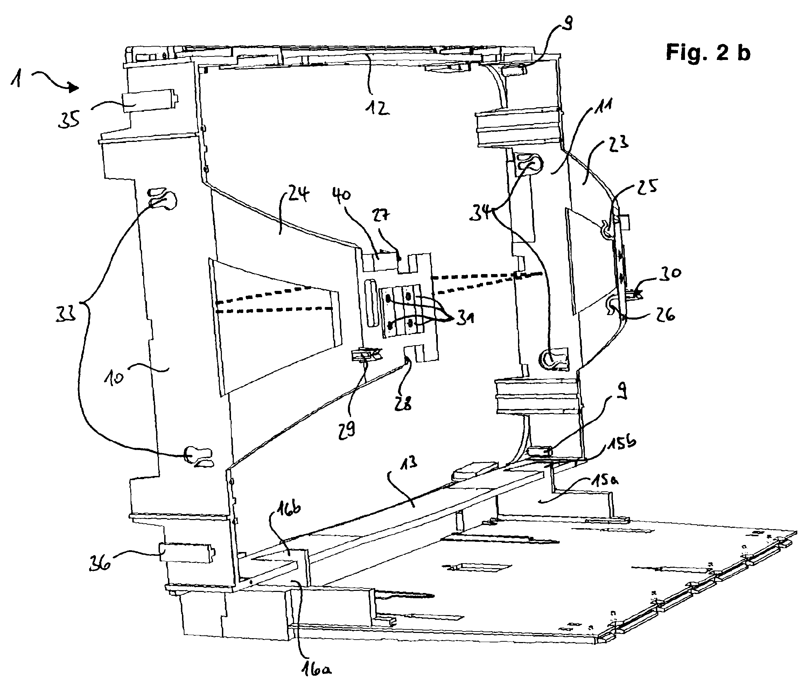

The frame according to the exemplary preferred embodiment of the present invention shown in Figs. 1, 2a and 2b shows the features of both embodiments of the present invention as described above. Of course, a frame according to the present invention is not limited thereto and might only comprise features as defined in one of the above embodiments.

With the help of the explosion view of a TV set which includes a frame 1 according to the present invention, the assembling method of such a TV set will be explained in the following.

In a first step the degaussing coil 3 is attached to the frame 1 which is stable enough to hold itself in an upright position and to hold the degaussing coil. Thereafter, the cathode ray tube 2 is fixed to the frame 1, e.g. with the help of four screws at each corner of the cathode ray tube 2. Both, the degaussing coil 3 and the cathode ray tube 2 are assembled from the front side of the frame 1. The benefit of such an arrangement is that it is not necessary to have any fixing parts for fixing the degaussing coil to the cathode ray tube, but the frame 1 includes snap-in holders or other support means for the degaussing coil.

As will be explained later, the foot of the frame 1 consists of a bottom plate which secures that the assembly of frame 1, degaussing coil 3 and cathode ray tube 2 can stand stable. This has the advantage that during assembly on an assembly line no special care has to be taken to secure such a partly assembled TV set, e.g. with vacuum holders attached to the cathode ray tube.

In a next second step the (not shown) electronic chassis and/or any other electric or electronic parts are assembled to the frame 1. Such parts can be e.g. a sub-chassis. Until now it is not necessary to distinguish between different kinds of televisions, i.e. in-between different television designs or color variations.

In the next third step, the sound system of the television gets assembled. If a classic stereo television set should be assembled, speaker boxes 4 will be snapped-in at the left and right sides of the frame 1. For a mono television set only one speaker box 4 will be snapped-in either at the left or at the right side of the frame 1 and for a monitor type television no speaker boxes will be attached to the frame 1 (such a television might have speaker boxes attached to the rear cover 8 or might comprise self-standing speaker boxes).

In the next fourth step, the correct mask corresponding to the sound system of the television will be snapped-in to the frame 1 in the correct design and color. For a monitor-type television set a monitor mask 5 not comprising any parts which are adapted to speakers is used whereas in case of a mono or stereo wing-type television set a corresponding wing-type mask 6 for internal speakers will be used instead of the monitor mask 5. Such a wing-type mask 6 is only partly shown in Fig. 1.

In the fifth step, the correct front control panel 7 with the correct design and color will be snapped-in to the frame 1. Usually, the front control panel has no own functionality and is only used as a housing part for the functional elements of the chassis which are located in positions behind the front control panel. Of course, the front control panel 7 can also have an own functionality, and in this case needs a connection to the chassis.

In the last sixth step, the rear cover 8 will be assembled by fixing it to the frame 1.

Figs. 2a and 2b show a frame 1 according to the present invention in more detail. Fig. 2a shows a front side view of the frame 1 and Fig. 2b shows a rear side view of said frame 1. Since both figures show the same frame 1 and the same reference signs denote the same elements in both figures, the following description relates to Fig. 2a and 2b.

The closed frame 1 according to the present invention basically consists of a right supporting member 10, a left supporting member 11, a top supporting member 12 and a bottom supporting member 13, which constitute a basic frame and which are connected to the bottom plate 14 via a left rib 15 and a right rib 16.

As mentioned above, the bottom plate 14 serves as foot or pedestal of the television set on which the television set stands on a television rack or an appropriate other underground. At the side of the bottom part 14 corresponding to the front of the television set, the two ribs 15 and 16 carry the basic frame which is constituted by the supporting members 10 to 13. The basic frame stands basically perpendicular on the bottom plate 14, i.e. when the bottom plate 14 lies in a xy-plane, the left rib 15 and the right rib are respectively located on the left front side and the right front side of the bottom plate 14 and are aligned in the z-direction carry the bottom supporting member 13 which is aligned in parallel to the bottom plate 14 and the left and right supporting members 11 and 10 which are connected to the bottom supporting member 13 at their lower ends are also aligned in the z-direction and therefore stand basically perpendicular on the bottom plate 14. The top ends of the left and right supporting members 11 and 10 are connected via the top supporting member 12. Depending on the heights of the ribs 15 and 16 an oblong opening formed by the bottom plate 14, the ribs 15 and 16, and the bottom supporting member 13 is bigger or smaller. The ribs 15 and 16 need to be strong enough to hold the cathode ray tube and all other parts attached to the basic frame as well as the basic frame itself.

This structure as shown in Figs. 2a and 2b and as described above is formed in one part. Preferably 100 % recycled PS-HI, i.e. high impact polysterol (styrol-butadiene (SB)), is used which can easily be reprocessed and formed into arbitrary designs. Of course, it is also possible to use another material which can be used for injection moulding, such as ABS resin (acrylnitril-butadiene-styrol) or PP (polypropylen).

This above described arrangement is constructed so that the cathode ray tube fits into the basic frame constituted by the supporting members 10 to 13 and can be fixed to this basic frame, e.g. with screws that are screwed into fixing members 9 which are arranged in the corners of the basic frame. Furtheron, as mentioned above, the frame 1 is self-standing on its foot, i.e. the bottom plate 14, with and without mounted cathode ray tube.

According to the present invention, there is no need for the basic frame constituted by the supporting members 10 to 13 to be stable in all directions, since it stabilizes itself in case a cathode ray tube is mounted. However, the following requirements have to be fulfilled to guarantee this feature. The length of each of the supporting members 10 to 13 has to be fixed so that the cathode ray tube 2 mounted into the frame 1 is firmly held against the bottom supporting member 13 and top parts 15B and 16B of the ribs 15 and 16, which top parts 15B and 16B extend through a part of the bottom supporting member 13. In such an arrangement, the cathode ray tube 2 cannot separate itself accidentally from the frame 1, since the top parts 15B, 16B of the ribs 15, 16 and the bottom supporting member 13 are formed so that they match to the bottom part of the cathode ray tube 2 butting therewith. Therefore, by firmly pressing the cathode ray tube 2 against the bottom supporting member 13 and the top parts 15B, 16B of the ribs 15, 16, the cathode ray tube is secured in the y-direction. The cathode ray tube 2 secures in such an arrangement that the basic frame constituted by the supporting members 10 to 13 which might be more or less unstable in the x- and z-directions becomes stable, since the cathode ray tube 2 is fixed to the frame 1, e.g. with screws to the fixing members 9 of the frame 1.

The bottom plate 14 of the frame 1 comprises guide grooves or other engaging members to carry the chassis, which might comprise one or more printed circle boards and a chassis retainer. The front part of the chassis will extend through the oblong opening in-between the bottom plate 14, the left rib 15, the right rib 16 and the bottom supporting member 13 so that operational control elements can be accessed from the front side of the television via the front control panel 7 which can be attached to the frame 1, e.g. with the snap-in method.

The supporting members 10 to 13 are strong enough to hold themselves in an upright position so that the degaussing coil 3 can be mounted to the frame 1 before the cathode ray tube 2 is fixed thereto. For holding and properly mounting the degaussing coil 3 it is only necessary that the supporting members hold themselves in an upright position and are not totally unstable, since the degaussing coil 3 itself is relatively rigid and therefore has a relatively fixed shape. After the mounting of the rigid degaussing coil 3, the basic frame constituted by the supporting members 10 to 13 might be in a more stable position than before.

On the other hand, the basic frame can be designed to be strong enough to hold a totally flexible degaussing coil.

To properly fix the degaussing coil 3 to the frame 1 the top supporting member 12 comprises a snap-in groove 17 or another appropriate fixing member in an appropriate position which picks-up the part of the degaussing coil 3 that has to be positioned in the vicinity of the top part of the cathode ray tube as well as two relieves 19 and 20 behind which the degaussing coil gets fixed. Similar relieves 21 and 22 and a similar snap-in groove 18 or appropriate pick-up is present at the bottom supporting member 13 to secure the degaussing coil also in an appropriate position in the vicinity of the bottom of the cathode ray tube 2. Furtheron, to properly hold the degaussing coil in an appropriate position at the backside of the cathode ray tube 2, the left supporting member 10 extends in an arm 24 and the right supporting member 11 extends in an arm 23. Both arms 24 and 23 are designed to surround parts of the backside of the mounted cathode ray tube 2 so that the degaussing coil 3 which can be fixed to these arms 24 and 23 is properly held in the correct places in the vicinity of the cathode ray tube 2. To properly hold the degaussing coil the right arm 24 comprises a lower snap-in holder 27 and an upper snap-in holder 28 and the left arm 23 comprises a lower snap-in holder 25 and an upper snap-in holder 26. The respective lower snap-in holders 28 and 26 carry the lower part of the degaussing coil 3 that are respectively held by the relieves 21 and 22 of the bottom supporting member 13 and the respective upper snap-in holders 27 and 25 carry the upper part of the degaussing coil 3 that are respectively held by the relieves 19 and 20 of the top supporting member 12.

As mentioned above, in this way the degaussing coil 3 gets properly fixed to the frame 1 before the cathode ray tube 2 is mounted thereto. Therefore, when mounting the cathode ray tube 2 onto the frame 1, no care has to be taken to ensure that the degaussing coil 3 is fixed in the correct position. Therefore, the frame 1 with the basic construction as described above which basically only needs to be so strong as to hold itself in an upright position before the cathode ray tube is mounted needs also to have the stiffness to support the degaussing coil 3 in this stage. On the other hand, if the degaussing coil 3 is rigid, it might also support the basic frame constituted by the supporting members 10 to 13 to stand in an upright position.

Similar to this pick-up attachment for the degaussing coil 3 which comprises the snap-in grooves 17 and 18, the relieves 19 to 22 and the snap-in holders 25 to 28 which are located on the arms 23 and 24 it is possible that the frame has other supporting functions, e.g. snap-in cable holders 29 and 30 respectively located at one of the arms 23 and 24 to hold the anode cable in a position which has a predetermined distance to the housing, since such a distance is necessary for security reasons.

Additionally, the arms can comprise one or more fixing points 31, 32 for cable holders, e.g. holes to fix or snap-in cable holders.

The left and/or right supporting members 11 and 10 can comprise fixing holes 33, 34 for speaker boxes as well as guide ribs 35, 36 and 37, 38, to which speaker boxes or other parts can be fixed, i.e. housing parts.

Futheron, the arms 23 and 24 can each comprise a holder 40, 39 to respectively hold the chassis in a service position. The holder 40 is provided at the right arm 24 to ensure a service position for right-handed persons and the holder 39 is provided at the left arm 23 to ensure a service position for left-handed persons. Of course, the holders 40, 39 for the service position can also be located on the bottom plate 14 or the left and right supporting members 11 and 10.

All those optional pick-up attachments are shown in Figs. 2a and 2b.

Since the supporting members 10 to 13 basically need not to be strong in all directions, as described above, but need only to have a fixed length, it is possible to design joint hinges within the basic frame that enable to fold it like a collapsible pannier. Such joint hinges can e.g. be respectively positioned at the left and right supporting members 11 and 10. In this case each of the supporting members 11 and 10 comprises a respective joint hinge at its top end part and its bottom end part and one middle joint hinge which respectively might extend through the respective arm extending from the corresponding supporting member, if neccessary. Such a joint hinge is preferrably integrally build into a respective supporting member by building a reduced part, i.e. a material reduction, into one side of said supporting member.

A TV set comprising a frame according to the present invention, leaves a bigger freedom in design material choice for the cosmetic parts such as the housing and the front panel. Since the design of the frame 1 according to the present invention is not limited to a simple structure or to be very strong, it is possible to provide a front panel which basically consists of a flat glass plate which has engaging members that can be engaged with the frame 1 and which might be opaque in some parts, since the frame 1 can be designed to have none or only few parts to be covered.

According to the present invention, the cosmetic parts can be mounted in the last production step to prevent damage and can also after delivering be easily exchanged to adapt the appearance of the product in case a new design is wanted, but the functionality of the television set itself is still satisfactory. Furtheron, the present invention also enables an easy upgrade of the TV set, e.g. an upgrade of a mono TV set into a stereo TV set or an upgrade of a wing-type stereo TV set into a monitor type TV set with external speaker boxes.

Furtheron, the service and repair is easy, since the frame has stable service positions for the chassis.

After the end-of-life of the television set, cosmetic parts can be easily disassembled for recycling. The internal frame and chassis plastic don't need paint, which make them good recyclable, especially since a good recyclable material can be chosen. Furtheron, the internal frame integrates different functions such as the degaussing coil holder, cable holder points, wire clips, and the cathode ray tube support as well as the support for the housing which might have no supporting function at all. This results in less parts, less different materials, and short disassembly time. Also the housing which can just consist of a rear cover and a flat glass panel combines high quality design with very good recyclability as well as the concept to snap-in the speaker boxes to the frame and to integrate the speaker grill into the front panel.

## Claims

1. Supporting frame (1) for a TV set which supports a cathode ray tube (2), **characterized by**
a closed frame which comprises two side parts (10, 11), a top part (12) and a bottom part (13) and which stabilizes itself in case the cathode ray tube (2) is mounted thereto; and
a bottom plate (14) integrally combined with said bottom part (13) and building a foot of the supporting frame (1) so that said supporting frame (1) stands in a stable position with and without mounted cathode ray tube (2).

2. Supporting frame (1) according to claim 1, **characterized in that** said bottom plate (14) is combined with said bottom part (13) of said closed frame through two ribs (15, 16) so that an oblong opening is build by said bottom plate (14) said two ribs (15, 16) and said bottom part (13) of said closed frame.

3. Supporting frame (1) according to claim 2, **characterized in that** said both ribs (15, 16) extend through said bottom part (13) of said closed frame so as to support the cathode ray tube (2) and matching with the butting parts of the cathode ray tube (2).

4. Supporting frame (1) according to anyone of claims 1 to 3, **characterized in that** said bottom plate (14) comprises a chassis holder into which a chassis with and/or without a chassis retainer can be inserted.

5. Supporting frame (1) according to claims 2 and 4, **characterized in that** operational control elements of said inserted chassis extend through said oblong opening.

6. Supporting frame (1) according to anyone of claims 1 to 5, **characterized in that** said foot (14) builds a foot of the TV set.

7. Supporting frame (1) according to anyone of claims 1 to 6, **characterized in that** said closed frame comprises joint hinges that enable to fold it like a collapsibe pannier.

8. Supporting frame (1) according to claim 7, **characterized in that** said joint hinges are build by reduced parts within the side parts (10, 11) of said closed frame.

9. Supporting frame (1) for a TV set which supports a cathode ray tube (2), **characterized by**
a pick-up attachment for a degaussing coil (3) into which the degaussing coil (3) is mounted before the cathode ray tube (2) is mounted into the frame.

10. Supporting frame (1) according to claim 9, **characterized by** a closed frame which comprises two side parts (10, 11) each of which extends in an arm (24, 23) partly surrounding the backside of the cathode ray tube (2) and having a holding member to hold the degaussing coil (3) at the backside of the cathode ray tube (2), a top part (12) comprising a holding member to hold the degaussing coil (3) at the top frontside of the cathode ray tube (2) and a bottom part (13) comprising a holding member to hold the degaussing coil (3) at the bottom frontside of the cathode ray tube (2).

11. Supporting frame (1) according to claim 10, **characterized in that** said holding members work according to the snap-in technique.

12. Supporting frame (1) according to claim 10 or 11, **characterized in that** at least one of said arms (24, 23) comprises a cable holder (30, 29) to hold an anode cable in a position which has a predetermined distance to a cabinet of the TV set.

13. Supporting frame (1) according to anyone of claims 10 to 12, **characterized in that** at least one of said arms (24, 23) comprises one or more fixing points (31, 32) for cable holders.

14. Supporting frame (1) according to anyone of claims 9 to 13, **characterized in that** at least one of said side parts (11, 10) comprises fixing holes (33, 34) for speaker boxes.

15. Supporting frame (1) according to anyone of claims 9 to 14, **characterized in that** at least one of said side parts (11, 10) comprises guide ribs (35, 36, 37, 38) to which speaker boxes or other parts can be fixed.

16. Supporting frame (1) according to anyone of claims 9 to 15, **characterized by** at least one holder (40, 39) to respectively hold the chassis in a service position.

17. Supporting frame (1) according to claim 16 in connection claim 10, **characterized in that** a respective holder (40, 39) is arranged on one of the arms (23, 24).

18. Supporting frame (1) according to anyone of claims 9 to 15, **characterized by** the features defined in anyone of claims 1 to 8.

19. Supporting frame (1) according to anyone of claims 1 to 18, **characterized in that** it is build in one part.

20. Supporting frame (1) according to anyone of claims 1 to 19, **characterized in that** it is build of recycled PS-HI.

21. Method to assemble a TV set, **characterited by** the following steps:
- placing a selfstanding footed closed frame (1) on an assembly line,
- fixing a degaussing coil (3) to the footed closed frame (1), and
- mounting a cathode ray tube (2) into the footed closed frame (1).

22. Method according to claim 21, **characterized in that** said selfstanding closed frame (1) is fold-up like a collapsible pannier before said degaussing coil (3) is fixed thereto.

23. Method according to claim 21 or 22, **characterized in that** a chassis with and/or without a chassis retainer is inserted into a chassis holder of a foot of said footed closed frame (1) after said cathode ray tube (2) is mounted.
